Europäisches Patentamt

European Patent Office

Office européen des brevets

(11) Veröffentlichungsnummer: **0 268 731**
**A2**

# (12) EUROPÄISCHE PATENTANMELDUNG

(21) Anmeldenummer: **87107441.5**

(22) Anmeldetag: **22.05.87**

(51) Int. Cl.⁴ **F42B 15/033 , F42B 15/02**

(30) Priorität: **25.09.86 DE 3632533**

(43) Veröffentlichungstag der Anmeldung:
**01.06.88 Patentblatt 88/22**

(84) Benannte Vertragsstaaten:
**DE ES FR GB GR IT NL SE**

(71) Anmelder: **Rheinmetall GmbH**
**Ulmenstrasse 125 Postfach 6609**
**D-4000 Düsseldorf(DE)**

(72) Erfinder: **Büchele-Buecher, Sigfrid**
**Mönkesweg 53**
**D-4000 Düsseldorf-Strümp(DE)**

(54) **Vorrichtung zur Überdruckbegrenzung für innerhalb eines Geschosses angeordnete Brennkammern.**

(57) Für eine raumsparende, sichere und schnell wirksame Überdruckbegrenzung enthält ein Geschoß innerhalb eines koaxial angeordneten Brennkammerdeckels 1 eine Vorrichtung, die aus einer symmetrischen Anordnung von zwei monostabilen Fluidik-Elementen 2 besteht, in denen der Gasstrom über ein vom Überdruck gesteuertes Umsteuerorgan 3, 4 schnell und sicher aus einer Arbeitsförderrichtung 14 in Ableitkanäle 8 umlenkbar ist. Das Umsteuerorgan 3, 4 wird durch einen in der Menge nur 5 % des Gashauptstromes betragenden Gasnebenstrom betätigt und kann in raumsparender Weise als Miniatur-Überdruckventil ausgeführt sein. Die Ableitkanäle 8 weisen am Geschoßumfang in entgegengesetzte Richtungen, so daß durch die austretenden Gase hervorgerufene Rückstoßkräfte hinsichtlich einer Flugbeeinflussung des Geschosses wirkungslos bleiben.

Fig.1

EP 0 268 731 A2

## Vorrichtung zur Überdruckbegrenzung für innerhalb eines Geschosses angeordnete Brennkammern

Die Erfindung betrifft eine Vorrichtung zur Überdruckbegrenzung für innerhalb eines Geschosses angeordnete Brennkammern nach dem Oberbegriff des Patentanspruchs 1.

Es ist bekannt, für diese Art der Überdruckbegrenzung in Geschossen mechanisch arbeitende, meist durch Federn in der Schließstellung gehaltene Überdruckventile einzusetzen, die hohen Brennkammerdrücken ausgesetzt sind, entsprechend eines vergleichsweisen großen abzuführenden überschüssigen Gasmassenstromes auch einen großen Platzbedarf benötigen und bei den hohen Brennkammerdrücken entsprechend stabil auszuführen sind. Wegen des großen Feder-Masse-Systems ergibt sich eine gewisse Ansprechträgheit, die insbesondere bei stoßartig wirkenden Druckbelastungen nachteilig ist.

Aufgabe der Erfindung ist es, zur Überdruckbegrenzung von innerhalb eines Geschosses angeordneten Brennkammern eine raumsparende und sichere sowie schnell wirksame Vorrichtung zu schaffen.

Gelöst wird diese Aufgabe durch die im kennzeichnenden Teil des Patentanspruchs 1 angegebenen Merkmale.

Vorteilhafte Ausgestaltungen und Weiterbildungen der Erfindung gehen aus den Merkmalen der Unteransprüche hervor.

Die Erfindung zeichnet sich besonders vorteilhaft dadurch aus, daß monostabile Fluidik-Wandstrahlelemente und vorzugsweise auch Ableitkanäle im Brennkammerdeckel vorgesehen sind, der bei einer Brennkammer den einzigen bisher nicht genutzten Raum eines im Geschoß angeordneten Steuerblocks darstellt, so daß gegenüber herkömmlichen Anordnungen innerhalb eines Geschosses eine erhebliche Verringerung des Gesamtplatzbedarfes erzielt wird. Hier besteht eine bevorzugte Ausführung darin, daß zwei Fluidik-Wandstrahlelemente mit ihren Kanälen und Steuerleitungen spiegelbildlich symmetrisch angeordnet sind und die Auslaßöffnungen der Ableitkanäle o. dgl. nach entgegengesetzten Richtungen weisen, so daß sich die vom strömenden Gas auf das Geschoß ausgeübten Kräfte gegenseitig aufheben, also eine von rückwirkenden Kräften freie Ableitung des Gases erzielt wird.

Vorzugsweise enthalten die Fluidik-Elemente eine den Gasstrom in der Nutzförderrichtung leitende Wandung und dieser gegenüber, von einer anderen Leitwand begrenzte bzw. ausgehende Ableitkanäle, wobei der Gasstrom im stabilen Zustand des Fluidik-Elementes der in der Nutzförderrichtung leitenden Wandung folgt und beim Auftreten eines Überdruckes zur anderen Wandung umlenkbar ist.

Die Nutzförderrichtung bzw. die entsprechende Leitung kann zu von der Brennkammer beschickten Steuerdüsen führen.

Besonders günstig ist eine Ausführung, bei der ein Umsteuerorgan eine von einem Gasnebenstrom beaufschlagte Steueröffnung in der in die Nutzförderrichtung leitenden Wandung aufweist, so daß der beim Überschreiten des gewählten Druckes aus dieser Steueröffnung austretende Gasnebenstrom den Gashauptstrom zur ableitenden Wandung bzw. den Ableitkanälen ablenkt. Bei dieser Ausführung befinden sich im Gashauptstrom keine für die Steuerung mechanisch bewegten Teile, und die Steuerung erfolgt lediglich abhängig von der Stärke des aus der Steueröffnung austretenden Gasnebenstromes. Es ist dabei eine Bauweise mit kurzen Ansprechzeiten in der Größenordnung von 2 ms möglich.

Zur Bestimmung des Ansprechdruckes kann im Gasnebenstrom, über den beispielsweise nur 5 % der Gesamtgasmenge geführt werden, ein Miniatur-Überdruckventil angeordnet sein, das eine entsprechend kleine Bauweise und dementsprechend auch kurze Ansprechzeiten aufgrund der vergleichsweise geringen Feder-Massekräfte besitzt. Dieses Überdruckventil ist einstellbar ausgebildet, um unterschiedliche Ansprechdrücke festzulegen. In einer anderen, nicht einstellbaren Ausführungsvariante kann das Umsteuerorgan auch als an sich bekannte Drossel ausgebildet und in nicht dargestellter Weise in der Wandung des Gashauptstromes angeordnet sein. Beim Einsatz einer derartigen Drossel kann auf den Gasnebenstrom und auf mechanisch zu bewegende Teile im Gashauptstrom verzichtet werden. Die kurzen Ansprechzeiten bei den monostabilen Fluidik-Wandstrahlelementen werden aufgrund des Coanda-Effektes zur Schaltung der Gasströme erzielt.

Damit die Fluidik-Elemente beim Absinken des Druckes unter den eingestellten Druck rasch und sicher in die stabile Stellung zurückkippen, können die den Gasstrom ableitende Wandung bzw. Ableitkanäle mit Belüftungsöffnungen, Schlitzen o. dgl. verbunden sein.

Die Erfindung wird anhand eines in den Zeichnungen dargestellten Ausführungsbeispieles näher erläutert. Es zeigt:

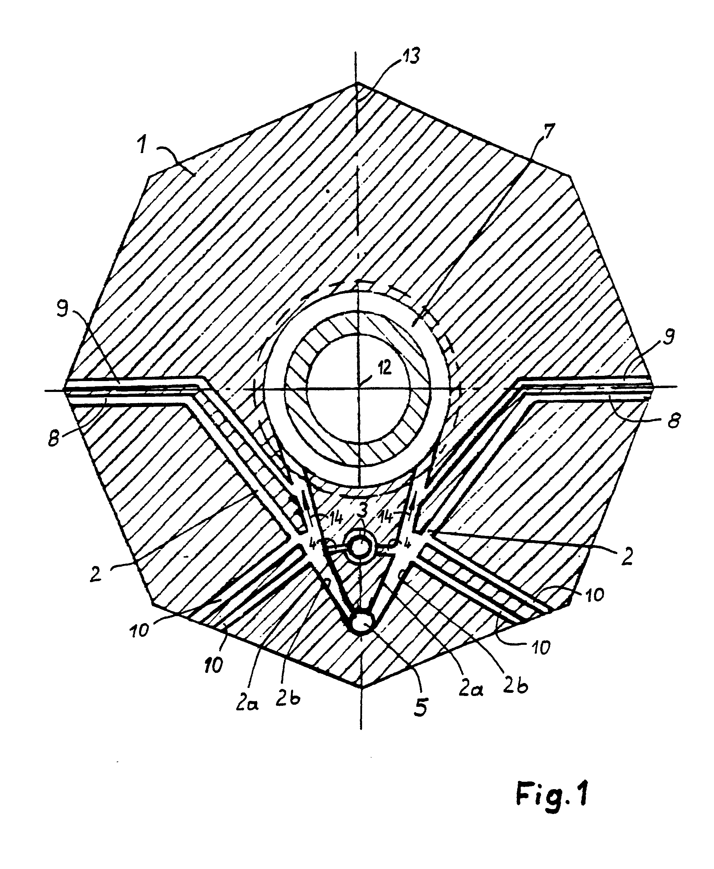

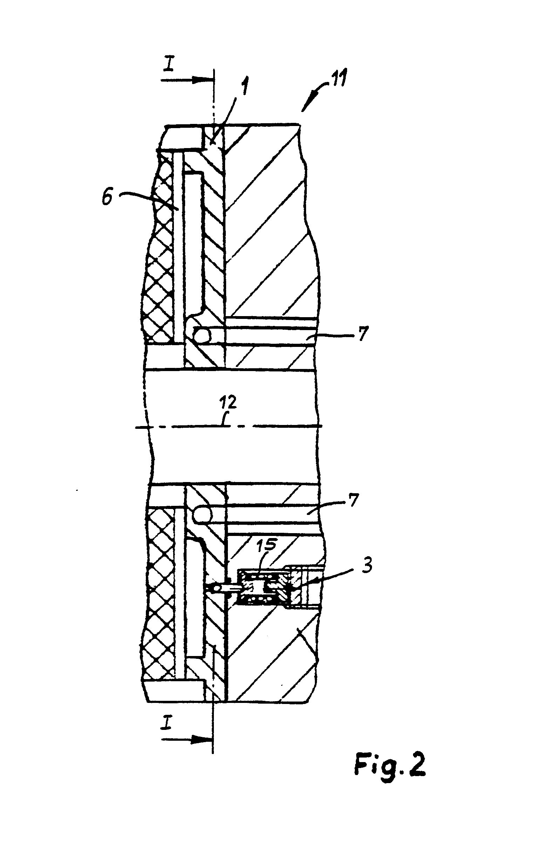

Fig. 1 eine Schnittdarstellung einer Vorrichtung zur Überdruckbegrenzung entlang eines in der Fig. 2 mit I - I gekennzeichneten Linie,

Fig. 2 einen Teillängsschnitt durch die Brennkammer und den Brennkammerdeckel eines Geschosses.

In einem innerhalb eines Geschosses 11 koaxial angeordneten Brennkammerdeckel 1 sind in einer quer zur Geschoßlängsachse 12 verlaufenden Ebene zwei monostabile Fluidik-Wandstrahlelemente 2 angeordnet. Diese Wandstrahlelemente 2 sind spiegelbildlich zu einer in Längsrichtung verlaufenden Symmetrieebene 13 ausgeformt und besitzen je eine einen Gasstrom in der Nutzförderrichtung leitende Wandung 2a und eine Leitwandung 2b, zu der der Gasstrom bei einer erwünschten Ableitung umgelenkt wird. In einer Brennkammer 6 werden hochgespannte Gase erzeugt, die über einen Gaskanal 5 in den Brennkammerdeckel 1 und hier in die Fluidik-Wandstrahlelemente 2 geleitet werden, in denen sie im stabilen Zustand der Fluidik-Elemente - den Wandungen 2a folgend - als Gasmasseströme über eine Steuerleitung 7 zu einer nicht dargestellten Versorgungskammer geleitet werden, von der aus sie in nicht dargestellter Weise die Steuerdüsen des Geschosses 11 beaufschlagen können. Von dem hochgespannten Gas aus der Brennkammer 6 wird auch ein an sich bekanntes mechanisches Minitur-Überdruckventil 3 beaufschlagt, das als Umsteuerorgan auf der Symmetrieebene 13 angeordnet ist und über Steueröffnungen 4 mit den Wandungen 2a verbunden ist. Wird ein am Überdruckventil 3 durch eine Feder 15 eingestellter Druck überschritten, wenn beispielsweise alle mit der Versorgungskammer 7 verbundenen Steuerdüsen geschlossen sind, dann öffnet das Überdruckventil 3 und gibt einem Gasnebenstrom den Durchtritt zu den Steueröffnungen 4 in den in der Nutzförderrichtung leitenden Wandungen 2a frei. Das bei den Steueröffnungen 4 austretende Gas aus dem Nebenstrom lenkt die Gashauptströme nach außen in Richtung auf die Wandungen 2b ab, wobei die Gashauptströme symmetrisch zueinander in Ableitkanäle 8 eintreten und von diesen in entgegengesetzte Richtungen aus dem Geschoß 11 austreten können, wodurch keine einseitig auf das Geschoß 11 rückwirkenden Kräfte entstehen. Die Menge des Gasnebenstromes beträgt etwa nur 5 % des Gashauptstromes. Zusätzliche Entlüftungsöffnungen 9, 10, die entlang der Wandung 2a beginnen und ebenfalls symmetrisch am Brennkammerdeckel angeordnet sind sowie in entgegengesetzter Richtung aus dem Geschoß austreten, gewährleisten, daß das System stabil bleibt, und daß beim Abbau des Überdruckes und Schließen des Ventiles 3 die monostabilen Fluidik-Elemente wieder in den stabilen Zustand zurückkippen, in der die Gasströme entlang der Wandungen 2a zur Steuerleitung 7 geleitet werden.

In einem weiteren, nicht dargestellten Ausführungsbeispiel kann das Umsteuerorgan auch als eine nicht einstellbare bekannte Drossel ausgebildet sein, die jedoch in der Wandung 2a des Gashauptstromes angeordnet ist.

Bezugszeichenliste

1 Brennkammerdeckel
2 Fluidik-Element
2a Wandung
2b Leitwand
3 Umsteuerorgan
4 Steueröffnung
5 Gaskanal
6 Brennkammer
7 Steuerleitung
8 Ableitkanal
9 Öffnung
10 Öffnung
11 Geschoß
12 Längsachse
13 Symmetrieebene
14 Arbeitsförderrichtung
15 Feder

**Ansprüche**

1. Vorrichtung zur Überdruckbegrenzung für innerhalb eines Geschosses (11) angeordnete Brennkammern (6) und von diesen aus beaufschlagte Steuerleitungen (7), **gekennzeichnet durch** die Anordnung von monostabilen Fluidik-Elementen (2) innerhalb eines koaxial angeordneten Brennkammerdeckels (1), in denen der Gasstrom über ein vom Überdruck gesteuertes Umsteuerorgan (3, 4) aus einer Arbeits-Förderrichtung (14) in Ableitkanäle (8) umlenkbar ist.

2. Vorrichtung nach Anspruch 1, **dadurch gekennzeichnet**, daß zwei Fluidik-Elemente (2) als Wandstrahlelemente ausgebildet sind, die eine den Gasstrom in der Arbeitsförderrichtung (14) leitende Wandung (2a) und eine dieser gegenüberliegende, in einen Ableitkanal (8) mündende Leitwand (2b) aufweist, wobei die Fluidik-Wandstrahlelemente (2) und die Ableitkanäle (8) spiegelbidlich symmetrisch angeordnet sind und die Auslasöffnungen der Ableitkanäle (8) in entgegengesetzte Richtungen weisen.

3. Vorrichtung nach Anspruch 1 und 2, **dadurch gekennzeichnet** , daß das einzige Umsteuerorgan (3, 4) auf der Symmetrieebene der Fluid-Wandstrahlelemente (2) angeordnet ist und beidseitig eine von einem Gasnebenstrom beaufschlagte Steueröffnung (4), in der in die Arbeitsförderrichtung (14) leitenden Wandung (2a) aufweist, wodurch die beim Überschreiten des gewählten Druckes aus diesen Steueröffnungen (4) austretende Gasnebenströme den jeweiligen Gashauptstrom zur ableitenden Wandung (2b) bzw. zu den Ableitkanälen (8) ablenken.

4. Vorrichtung nach einem der Ansprüche 1 bis 3, **dadurch gekennzeichnet**, daß im Gasnebenstrom als Umsteuerorgan (3) ein Überdruckventil angeordnet ist.

5. Vorrichtung nach Annspruch 1 und 2, **dadurch gekennzeichnet**, daß das Umsteuerorgan (3) in der Wandung 2a angeordnet und als Drossel ausgebildet ist.

6. Vorrichtung nach einem der Ansprüche 1 bis 5, **dadurch gekennzeichnet**, daß die den Gasstrom ableitende Wandung (2b) bzw. die Ableitkanäle (8) mit Belüftungsöffnungen (9, 10), die aus Bohrungen, Schlitzen o. dgl. bestehen können, verbunden sind.

**Fig.1**

Rheinmetall GmbH

Fig. 2

Rheinmetall GmbH